# EUROPÄISCHE PATENTSCHRIFT

(11) **EP 2 630 012 B1**
(45) Veröffentlichungstag und Bekanntmachung des Hinweises auf die Patenterteilung: **13.12.2017**
(21) Anmeldenummer: 11771120.0
(22) Anmeldetag: 17.10.2011
(51) Int. Cl.: B60T 7/04

(54) **FEHLERSICHERE PARKBREMSE FÜR KRAFTFAHRZEUGE**
FAULT-SECURE PARKING BRAKE FOR MOTOR VEHICLES
FREIN DE STATIONNEMENT POUR VÉHICULES À MOTEUR, PRÉSENTANT UNE PROTECTION CONTRE LES DÉFAILLANCES

(30) Priorität: 14.10.2011 DE 102011084534; 18.10.2010 DE 102010042595
(43) Veröffentlichungstag der Anmeldung: 28.08.2013
(73) Patentinhaber: Continental Teves AG & Co. oHG, 60488 Frankfurt (DE)
(72) Erfinder: HEISE, Andreas, 64390 Erzhausen (DE); SCHADE, Kai, 64839 Münster (DE)
(86) Internationale Anmeldenummer: PCT/EP2011/068065
(87) Internationale Veröffentlichungsnummer: WO 2012/052380

(56) Entgegenhaltungen:
- EP-A1- 1 655 830
- WO-A1-99/26818
- WO-A1-2009/074252
- WO-A2-2004/007242
- DE-A1- 10 150 803
- DE-A1- 19 751 431
- DE-A1-102007 029 632
- DE-A1-102007 036 259
- DE-A1-102008 033 309
- DE-C1- 10 006 656
- US-A1- 2004 201 270

## Beschreibung

Die Erfindung betrifft ein Bremssystem gemäß Oberbegriff von Anspruch 1 sowie ein Kraftfahrzeug nach Anspruch 17.

Vielfach weisen moderne Fahrzeuge eine elektrische Parkbremse auf. Diese kann durch einen Bedienschalter vom Fahrer betätigt werden, der mit einem elektronischen Steuergerät verbunden ist, welches einen gemeinsamen oder zwei getrennte Parkbremsaktuatoren für zwei Räder ansteuert. Unter Sicherheitsaspekten ist es wünschenswert, dass die elektrische Parkbremse auch bei Auftreten von Einzelfehlern zuverlässig funktioniert.

Aus der DE 197 51 431 A1 ist eine elektromechanische Feststellbremsanlage für Kraftfahrzeuge bekannt, die eine Bremsbetätigungseinrichtung, eine elektronische Steuereinrichtung zur Umwandlung von Eingangssignalen in entsprechende Ausgangssignale und zwei motorisch betätigbare Feststellbremsen umfasst, die in Abhängigkeit von Ausgangssignalen der Steuereinrichtung ansteuerbar sind. Zur Erhöhung der Funktionssicherheit weist die elektronische Steuereinrichtung zwei oder mehrere parallele Steuereinheiten zur getrennten Verarbeitung der Eingangssignale auf. Somit kann bei einem Fehler in einem der Zweige noch wenigstens eine Feststellbremse betätigt werden. Vorzugsweise kann über einen Zusatzschalter eine Reservebatterie zur Versorgung der Steuereinheiten und der Motoren zugeschaltet werden. Bei Fahrzeugen mit Automatikgetriebe ist es vorgesehen, im Fall eines elektrischen Fehlers anstelle einer Reservebatterie die Parksperre im Getriebe zum Halten des Fahrzeugs zu nutzen.

Auch typische Fahrzeuge mit Schaltgetriebe können durch ein Einlegen einer geeigneten Getriebestufe eine hinreichende Abstellbarkeit am Hang gewährleisten, indem sie als zweites redundantes Mittel zur Verhinderung eines Wegrollens des Fahrzeugs neben der Parkbremse dienen.

Von Elektromotoren angetriebene Fahrzeuge können ein Getriebe aufweisen; häufig sind hingegen keine Getriebe vorhanden, da Elektroantriebe auch ohne Schaltgetriebe einen großen Drehzahlbereich und damit weiten Geschwindigkeitsbereich abdecken können. Weiterhin sind moderne Verbrennungsmotoren und Getriebe häufig derart reibungsarm ausgelegt, dass eine Selbsthemmung, welche ein Abstellen am Berg mit eingelegter Getriebestufe erlauben würde, nicht sichergestellt ist. Auch solche Fahrzeugvarianten bedürfen einer sicheren redundanten Wegrollverhinderung am Hang.

Aus der DE 10 2007 029 632 A1 ist eine Feststellbremsanlage für Kraftfahrzeuge mit einem Bedienelement und wenigstens zwei elektromechanischen Aktuatoren zur Erzeugung einer Feststellbremskraft an jeweils einem Rad des Kraftfahrzeugs bekannt, bei der die elektromechanischen Aktuatoren jeweils mit einer Radelektronik versehen sind und wobei das Bedienelement mittels einer ersten Signalleitung über eine Steuereinheit mit der Radelektronik des ersten elektromechanischen Aktuators verbunden ist und mittels einer zweiten Signalleitung über eine weitere Steuereinheit mit der Radelektronik des zweiten elektromechanischen Aktuators verbunden ist. Weiterhin ist mindestens eine dritte Signalleitung vorgesehen, die das Bedienelement direkt mit den Radelektroniken oder jeweils mit einem der elektromechanischen Aktuatoren verbindet und den Fahrerwunsch übermittelt. Vorzugsweise ist die dritte Signalleitung derart ausgebildet, dass sie einerseits das Bedienelement direkt mit den Radelektroniken der elektromechanischen Aktuatoren verbindet und andererseits die beiden Radelektroniken miteinander verbindet und eine Kommunikation zwischen den Radelektroniken ermöglicht. Bevorzugt ist eine redundante Stromversorgung der Feststellbremsanlage vorgesehen. Somit ist ein gegenüber Einzelfehlern abgesichertes Halten des Fahrzeugs gewährleistet, allerdings ist die Feststellbremsanlage aufwändig und somit kostspielig.

Aus der DE 100 06 656 C1 ist eine Feststellbremsanlage für Kraftfahrzeuge bekannt, welche eine Parkbrems-Steuereinheit und eine Bremsassistenzfunktions-Steuereinheit bekannt, welche einen Feststellbrems-Aktuator und einen Betriebsbrems-Aktuator ansteuern und damit Bremsmittel betätigen. Die beiden Steuereinheiten weisen jeweils eine Verbindung zu einem Bedienelement auf.

Aus der DE 103 03 383 A1 ist ein Verfahren und eine Vorrichtung zur Überwachung des sicheren Betriebs einer Funktionseinheit bekannt. Dabei ist ein Duplexsystem, was eine Fail-Operational-Einheit darstellt, aus zwei Fail-Safe-Einheiten aufgebaut, welche über eine Datenleitung miteinander kommunizieren können.

Aufgabe der vorliegenden Erfindung ist es, eine alternative elektrische Parkbremse bereitzustellen, welche ein fehlersicheres Halten des Fahrzeugs an einem Hang ermöglicht und die bisher im Stand der Technik bekannten Bremssysteme verbessert.

Diese Aufgabe wird durch ein Bremssystem gemäß Anspruch 1 (in Verbindung mit einem an sich bekannten Bedienelement und an sich bekannten Parkbremsaktuatoren) sowie ein Kraftfahrzeug gemäß Anspruch 17 gelöst.

Es wird also ein elektronisches Steuergerät für ein Bremssystem eines Kraftfahrzeugs bereitgestellt, welches mindestens eine Schnittstelle zu einem Bedienelement, insbesondere einem Parkbremsbedienschalter, und mindestens zwei Ansteuerschaltungen für elektrische Aktuatoren aufweist, insbesondere elektrische Parkbremsaktuatoren. Erfindungsgemäß weist das elektronische Steuergerät zwei oder mehr unabhängige Recheneinheiten auf, die über einen Datenbus direkt miteinander verbunden sind.

Übliche Bedienelemente für die Parkbremse weisen redundante, d.h. mehrfach vorhandene, Schaltkontakte und eine redundante Verbindung zum Steuergerät auf. Somit ist eine fehlersichere, d.h. insbesondere eine gegenüber Auftreten eines beliebigen Einzelfehlers unempfindliche, Erkennung des Fahrerwunsches gewährleistet. Auch die Verwendung zweier Ansteuerschaltungen und zweier unabhängiger Recheneinheiten gewährleistet, dass bei Auftreten eines Fehlers zumindest ein Aktuator noch betätigt werden kann. Indem die Recheneinheiten voneinander unabhängig und über einen Datenbus direkt miteinander verbunden sind, kann im Normalfall entweder jede Recheneinheit den ihr zugeordneten Aktuator oder eine Recheneinheit alle Aktuatoren der Parkbremse steuern. Im zweiten genannten Fall kann die weitere Recheneinheit zur optimalen Nutzung der vorhandenen Rechenleistung andere Programme ausführen und nur dann die Parkbremssteuerung übernehmen, wenn eine Fehlermeldung über den Datenbus eintrifft oder eine regelmäßig eintreffende Meldung über die korrekte Funktion der anderen Recheneinheit ausbleibt. Die Integration von Ansteuerschaltungen inklusive Leistungselektronik in einem Steuergerät sorgt für einen geringen Fertigungsaufwand. Da ein mit dem erfindungsgemäßen elektronischen Steuergerät ausgestattetes Bremssystem ein sicheres Halten gewährleistet, kann bei Kraftfahrzeugen mit Automatikgetriebe die Getriebesperre entfallen.

Erfindungsgemäß ist mindestens zwei unabhängigen Recheneinheiten jeweils eine Stromversorgung zugeordnet. Vorzugsweise umfassen die Stromversorgungen mindestens einen Spannungswandler und mindestens eine Sicherung, insbesondere jeweils eine Batterie und/oder einen Generator. Somit kann auch bei einer Störung der Energieversorgung noch ein Zuspannen der Parkbremse erfolgen. Je nach Fehlerwahrscheinlichkeit der einzelnen Komponenten kann hierbei das benötigte Maß an Redundanz bereitgestellt werden.

Es ist vorteilhaft, wenn die unabhängigen Recheneinheiten und der Datenbus auf einem Substrat, insbesondere einem Silizium-Chip, integriert sind. Dies ermöglicht eine kostengünstige Fertigung und - begünstigt durch die geringen Dimensionen - eine schnelle Datenübertragung auf dem Datenbus mit kurzen Latenzzeiten. Hierdurch ist es auch möglich, dass Informationen zum Zustand des Fahrzeugs, die typischerweise im Steuergerät des Bremssystems vorhanden sind, zwischen den Recheneinheiten ausgetauscht werden. Die weitere Recheneinheit kann daher Programme ausführen, die unter Verwendung entsprechender Informationen z.B. komfortorientierte Fahrerassistenzfunktionen bereitstellen. Da die Datenübertragung über den Datenbus zwischen den Recheneinheiten erfolgt, wird die Programmstruktur gegenüber der Ausführung aller Programme auf einer Recheneinheit vereinfacht. Besonders vorteilhaft ist es, wenn auch weitere Teile des Steuergeräts auf einem Substrat bzw. Silizium-Chip integriert sind, insbesondere dem auch die Recheneinheiten umfassenden Silizium-Chip. Dies verringert die Herstellungskosten weiter und ermöglicht eine kompaktere Bauweise des Steuergeräts.

Gemäß einer bevorzugten Ausführungsform der Erfindung sind mindestens zwei der unabhängigen Recheneinheiten zumindest teilweise redundant ausgeführt. Indem z.B. die Funktionsgruppen mit der höchsten Fehlerwahrscheinlichkeit redundant, d.h. mehrfach, ausgeführt sind, können auch bei Auftreten eines Einzelfehlers die normalen Programme der Recheneinheiten weiter ausgeführt werden.

Gemäß einer besonders bevorzugten Ausführungsform der Erfindung ist mindestens eine der Recheneinheiten, insbesondere zwei, als kernredundanter Mikrocontroller ausgebildet, insbesondere mit zwei im Lockstep-Verfahren arbeitenden Prozessorkernen. Zwei im Lockstep-Verfahren arbeitende Prozessorkerne sind durch eine mit beiden Prozessorkernen verbundenen Vergleichseinheit gekennzeichnet, die eine Erkennung von Einzelfehlern ermöglicht. Werden drei redundante Kerne und eine Schaltung zur Ermittlung einer Mehrheitsentscheidung eingesetzt, kann ein Einzelfehler nicht nur erkannt sondern auch korrigiert werden.

Gemäß einer weiteren besonders bevorzugten Ausführungsform der Erfindung ist mindestens eine der Recheneinheiten als Mikrocontroller mit asynchroner Redundanz ausgebildet, wobei zwei Prozessorkerne zumindest teilweise auf gemeinsame Einrichtungen zugreifen, insbesondere einen mit Paritätsüberprüfung gesicherten flüchtigen oder nichtflüchtigen Speicher. Hierbei können die Komponenten redundant bzw. mehrfach ausgeführt werden, welche die höchste Fehlerwahrscheinlichkeit besitzen. Eine Erhöhung der Zuverlässigkeit mit asynchroner Redundanz ist daher mit einem geringeren Aufwand als bei kernredundanten Mikrocontrollern verbunden.

Gemäß einer weiteren besonders bevorzugten Ausführungsform der Erfindung ist mindestens eine der Recheneinheiten als durch einen Watchdog-Zähler abgesicherter Mikrocontroller ausgebildet, welcher zwei sich gegenseitig überwachende Prozesse ausführt. Diese Variante bietet unter anderem durch die Erkennung von Endlos-Schleifen eine gegenüber einem einfachen Mikrocontroller erhöhte Zuverlässigkeit bei geringen Kosten.

Es ist vorteilhaft, wenn zwei Recheneinheiten mit unterschiedlich hohem Ausmaß an Redundanz eingesetzt werden, so dass z.B. sicherheitsrelevante Programme von einem kernredundanten Mikrocontroller ausgeführt werden, während Komfortfunktionen durch einen einfachen Mikrocontroller bereitgestellt werden.

Zweckmäßigerweise sind mindestens zwei unabhängige Ansteuerschaltungen für elektrische Parkbremsaktuatoren, insbesondere Pulsweitenmodulationsschaltungen und Brückenschaltungen, vorhanden, denen jeweils eine Stromversorgung zugeordnet ist, welche vorzugsweise mindestens einen Spannungswandler und mindestens eine Sicherung, insbesondere jeweils eine Batterie und/oder einen Generator umfasst. Eine unabhängige Stromversorgung der unabhängigen Ansteuerschaltungen erhöht die Zuverlässigkeit weiter.

Es ist vorteilhaft, wenn mindestens eine der Recheneinheiten Mittel zur Fehlererkennung umfasst, welche bei Auftreten eines Fehlers ein Signal auf dem Datenbus und/oder einer Fehlerschnittstelle ausgeben. Dies kann insbesondere durch eine spezielle Schaltungsanordnung bereitgestellt werden, die bei einem Fehler der überwachten Recheneinheit sicherstellt, dass entsprechende Fehler- bzw. Umschaltsignale bei der andren Recheneinheit und/oder speziellen Umschaltern eintreffen.

Es ist besonders vorteilhaft, wenn eine erste Recheneinheit mit zwei Ansteuerschaltungen für elektrische Parkbremsaktuatoren, insbesondere Brückenschaltungen, verbunden ist, wobei in der Verbindung zwischen erster Recheneinheit und mindestens einer Ansteuerschaltung ein Umschalter angebracht ist, der mit einer zweiten Recheneinheit und einer Fehlerschnittstelle der ersten Recheneinheit verbunden ist. Somit steuert im Normalfall die erste Recheneinheit beide Parkbremsaktuatoren an, wodurch die volle Rechenleistung der zweiten Recheneinheit zur Ausführung anderer Programme verfügbar ist. Alternativ könnte die zweite Recheneinheit auch in einen Energiesparmodus mit verringerter Taktfrequenz und/oder einer Begrenzung der mit Strom versorgten Funktionsblöcke geschaltet werden.

Es ist weiterhin besonders vorteilhaft eine erste Recheneinheit mit einer ersten Ansteuerschaltung für elektrische Parkbremsaktuatoren und eine zweite Recheneinheit mit einer zweiten Ansteuerschaltung für elektrische Parkbremsaktuatoren verbunden sind. Somit steuert im Normalfall jede Recheneinheit den ihr zugeordneten Parkbremsaktuator an. Tritt ein Fehler in einer der Recheneinheiten auf, so kann mindestens der Parkbremsaktuator zugespannt werden, welcher der anderen Recheneinheit zugeordnet ist.

Es ist auch besonders vorteilhaft, wenn in der Verbindung zwischen erster Recheneinheit und erster Ansteuerschaltung ein erster Umschalter angebracht ist, und in der Verbindung zwischen zweiter Recheneinheit und zweiter Ansteuerschaltung ein zweiter Umschalter angebracht ist, wobei der erste Umschalter mit der zweiten Recheneinheit und einer Fehlerschnittstelle der ersten Recheneinheit verbunden ist, und der zweite Umschalter mit der ersten Recheneinheit und einer Fehlerschnittstelle der zweiten Recheneinheit verbunden ist. Indem jede Recheneinheit Mittel zur Fehlererkennung umfasst, die einen zwischen der Recheneinheit und dem zugeordneten Parkbremsaktuator befindlichen Umschalter über eine Fehlerschnittstelle mit Umschaltsignalen ansteuern kann, ist die Ansteuerung beider Parkbremsaktuatoren auch bei einem Fehler in einer der Recheneinheiten sichergestellt.

Vorzugsweise umfasst das elektronische Steuergerät mindestens einen Beschleunigungssensor, mindestens einen Gierratensensor, und mindestens eine Schnittstelle für Raddrehzahlsensoren. Diese Informationen ermöglichen eine Fahrdynamikregelung des Kraftfahrzeugs und eine Schlupfregelung des Bremssystems.

Bevorzugt umfasst das elektronische Steuergerät mindestens eine Schnittstelle zu einem Externdatenbus, insbesondere einem CAN- oder FlexRay-Bus. Somit kann z.B. für eine Antriebsschlupfregelung eine Motormomentanforderung an das Motorsteuergerät gesendet werden.

Zweckmäßigerweise umfasst das elektronische Steuergerät mindestens ein elektrisch ansteuerbares Hydraulikventil, mindestens eine elektrische Hydraulikpumpe, und mindestens eine Schnittstelle für Drucksensoren. Diese Komponenten ermöglichen eine elektronische Regelung eines hydraulischen Bremssystems.

Die Erfindung betrifft ein Bremssystem für ein Kraftfahrzeug, umfassend eine Betriebsbremse an allen Rädern und elektrische Parkbremsaktuatoren an mindestens zwei Rädern, welches ein erfindungsgemäßes elektronisches Steuergerät umfasst, das mit den elektrischen Parkbremsaktuatoren verbunden ist.

Gemäß einer bevorzugten Ausführungsform des erfindungsgemäßen Bremssystems weist die Betriebsbremse zumindest einen hydraulischen Bremskreis auf und das elektronische Steuergerät stellt eine Schlupfregelung und/oder Fahrdynamikregelung bereit.

Gemäß einer weiteren bevorzugten Ausführungsform der Erfindung weisen die Räder mindestens einer Achse als Betriebsbremse elektromechanische Reibbremsen auf.

Die Erfindung betrifft ferner ein Kraftfahrzeug, welches mit einem erfindungsgemäßen Bremssystem ausgestattet ist.

Zweckmäßigerweise ist ein Verbrennungsmotor und/oder ein Elektromotor des erfindungsgemäßen Kraftfahrzeugs über ein automatisches Getriebe ohne Getriebesperre mit den Rädern mindestens einer Achse verbunden.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: eine schematische Darstellung eines Bremssystems,
- Fig. 2: ein erstes Ausführungsbeispiel einer fehlersicheren Parkbremse,
- Fig. 3: ein zweites Ausführungsbeispiel einer fehlersicheren Parkbremse,
- Fig. 4: ein drittes Ausführungsbeispiel einer fehlersicheren Parkbremse, und
- Fig. 5: verschiedene Ausführungsformen zumindest teilweise redundanter Recheneinheiten.

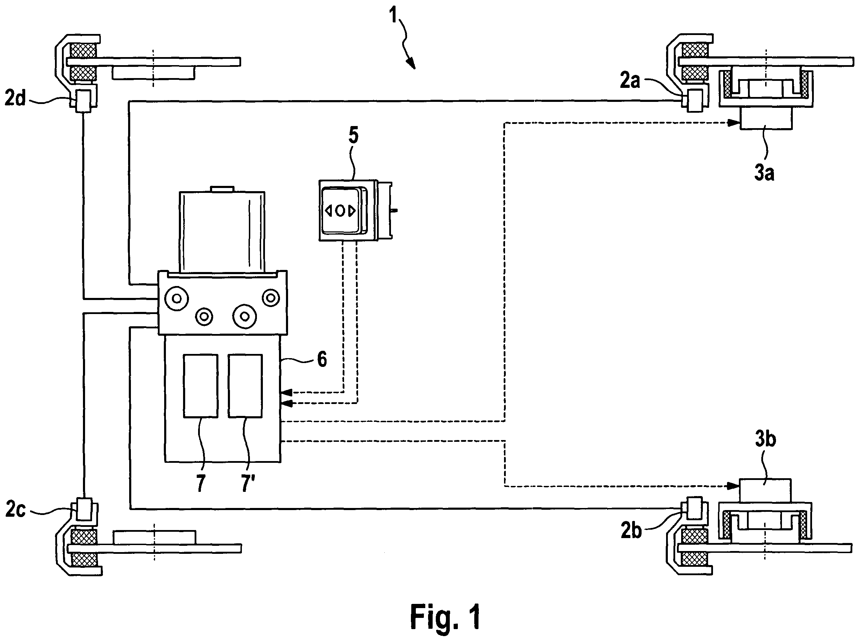

Figur 1 zeigt schematisch ein Beispiel für ein Bremssystem 1, welches mit einer Betriebsbremse an allen Rädern und einer Parkbremse an zwei Rädern ausgestattet ist. Hierbei sind die Räder der Hinterachse mit hydraulischen Reibbremsen 2a, 2b und elektrischen Parkbremsaktuatoren 3a, 3b ausgestattet, während die Räder der Vorderachse nur hydraulische Reibbremsen 2c, 2d aufweisen. Sowohl die Betriebs- als auch die Parkbremse sind mit einem elektronischen Steuergerät 6 verbunden, welches zwei unabhängige Recheneinheiten, 7, 7' aufweist und über einen Parkbremsbedienschalter 5 einen Fahrerwunsch zur Betätigung der elektrischen Parkbremse empfängt.

Die Betriebsbremse kann über hydraulische Reibbremsen oder ganz oder teilweise elektromechanische Bremsen verfügen. Das erfindungsgemäße Steuergerät 6 ermöglicht eine fehlersichere Parkbremse sowohl mit einer rein hydraulischen Betriebsbremse als auch mit einer Kombinationsbremse, welche z.B. hydraulische Bremsen an der Vorderachse und elektromechanische Reibbremsen an der Hinterachse aufweist. Sind zumindest die Räder einer Achse mit hydraulischen Reibbremsen ausgestattet, so ist das elektronische Steuergerät 6 vorzugsweise mit Magnetventilen und einer elektrisch ansteuerbaren Hydraulikpumpe ausgestattet. Um eine Schlupf- und/oder Fahrdynamikregelfunktion der Betriebsbremse bereitzustellen, ist das elektronische Steuergerät 6 bevorzugt mit Raddrehzahlsensoren an allen geregelten Rädern und/oder zumindest einem Gierratensensor und einem Querbeschleunigungssensor ausgestattet (die Sensoren sind in Fig. 1 nicht gezeigt).

Die Schlupf- und/oder Fahrdynamikregelung kann mittels an sich bekannter Verfahren erfolgen, wie z.B. in der EP 0 792 229 B1 veröffentlicht.

Das Bremssystem 1 weist zweckmäßigerweise ein (nicht gezeigtes) Bremspedal auf, über welches der Fahrer die Betriebsbremse betätigen kann. Das Bremspedal kann mit oder ohne Hilfskraftunterstützung z.B. durch einen Unterdruckbremskraftverstärker auf einen Hauptbremszylinder einwirken, der eine Druckerhöhung in mindestens einem hydraulischen Bremskreis hervorruft. Alternativ oder ergänzend kann das Bremspedal mit einem Weg- oder Winkelsensor ausgestattet sein. Bei einem zumindest teilweise elektrisch angetriebenen Fahrzeug kann dann eine regenerative Bremsung erfolgen, bei welcher das vom Fahrer angeforderte Bremsmoment ganz oder teilweise durch einen Elektromotor im Generatorbetrieb aufgebaut wird. Dies ermöglicht eine Rekuperation, bei der kinetische Energie des Fahrzeugs in elektrische Energie umgesetzt und z.B. in einer Batterie gespeichert wird. Auch die Verwendung einer fremdkraftbetriebenen Betriebsbremse und eines Simulators zur Bereitstellung eines komfortablen Pedalgefühls ist möglich.

Um eine hohe Zuverlässigkeit zu gewährleisten, weist das elektronische Steuergerät 6 mindestens zwei in wesentlichen Punkten unabhängig voneinander arbeitende Recheneinheiten 7, 7' auf, bei denen durch geeignete Anpassung von Recheneinheit, weiteren Schaltungsteilen und Steuerprogrammen ein zuverlässiges Funktionieren des Gesamtsystems sichergestellt wird.

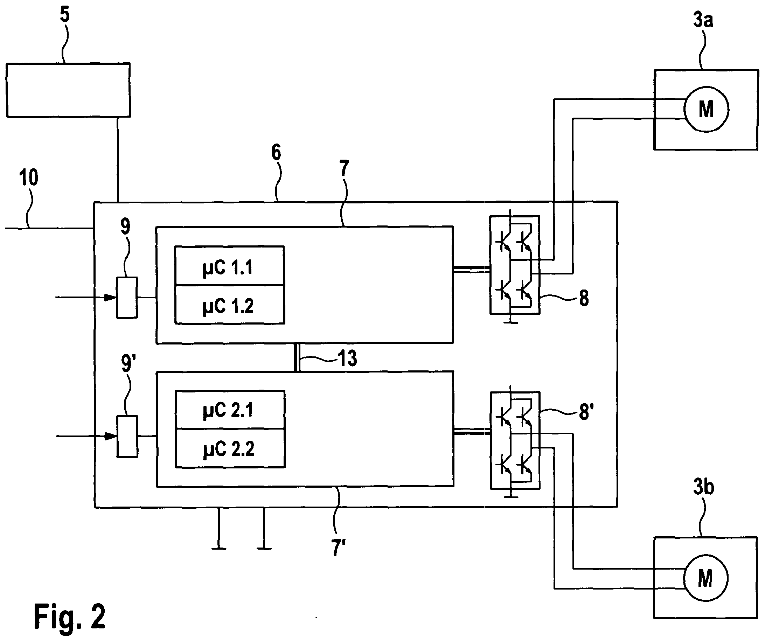

Figur 2 zeigt ein erstes Ausführungsbeispiel einer fehlersicheren Parkbremse. Hier wie in den folgenden Figuren werden in ihrer Funktion gleiche Elemente jeweils mit gleichbleibenden Bezugszeichen versehen.

Vorzugsweise weist Bedienschalter 5 redundante Schaltkontakte auf und ist (wie in Fig. 1 angedeutet) über eine gegenüber Einfachfehlern abgesicherten Leitung (wie z.B. zwei isolierten Drähte und Masse) mit dem elektronischen Steuergerät 6 verbunden. Das Steuergerät 6 besitzt in diesem Ausführungsbeispiel zwei kernredundante Mikrocontroller 7, 7', die jeweils zwei Prozessorkerne µC 1.1, µC 1.2 bzw. µC 2.1, µC 2.2 aufweisen, welche im Lockstep-Verfahren betrieben werden. Das heißt, die beiden Prozessorkerne führen jeweils dieselben Anweisungen aus, woraufhin die Ergebnisse in einem Vergleicher auf Übereinstimmung überprüft werden. Treten Abweichungen auf, so kann in einer Fehlerbehandlungsroutine die Fehlerursache bestimmt und/oder die Prozessorkerne erneut synchronisiert werden.

Die kernredundanten Mikrocontroller 7, 7' sind über einen Datenbus 13 direkt miteinander verbunden, an den vorzugsweise keine weiteren Funktionsblöcke bzw. externe Schaltungen angeschlossen sind. Dies ermöglicht eine schnelle Datenübertragung (d.h. hohe Übertragungsrate) ohne lange Latenzzeiten (da sowohl kurze Signallaufzeiten als auch hohe möglichen Taktraten erreicht werden). Jedem der kernredundanten Mikrocontroller 7, 7' ist eine Ansteuerschaltung 8, 8' für einen elektrischen Parkbremsaktuator 3a, 3b zugeordnet, insbesondere einer Brückenschaltung. Somit können die beiden Recheneinheiten 7, 7' unabhängig voneinander den oder die elektromotorischen Parkbremsaktuatoren 3a, 3b jeweils eines Rades ansteuern.

Um auch gegenüber Fehlern der Stromversorgung abgesichert zu sein, weisen die beiden kernredundanten Mikrocontroller 7, 7' eine zumindest teilweise unabhängige Stromversorgung 9, 9' auf. Hierbei kann es sich um unabhängige Gleichspannungswandler mit jeweils eigener Sicherung handeln, die mit einer Batterie und/oder einem Generator verbunden sind. Eine erhöhte Zuverlässigkeit kann mit zwei unabhängigen Batterien erreicht werden. Bei Fahrzeugen mit zumindest teilweise elektrischem Antrieb kann hierfür auch die Antriebsbatterie mit einem geeigneten Spannungswandler ausgestattet werden, der (entsprechend der deutlich höheren Spannung) geeignet ausgelegt ist. Zweckmäßigerweise werden auch die Ansteuerschaltungen 8, 8' an getrennte Stromversorgungen angeschlossen.

Das elektronische Steuergerät 6 weist vorzugsweise ein oder mehrere Interfaces bzw. Schnittstellenbausteine 10 für Externdatenbusse wie CAN oder FlexRay auf. Somit können z.B. Anforderungen an ein Motorsteuergerät gesendet werden, wie dies z.B. für eine Antriebsschlupfsteuerung sinnvoll ist.

Fordert der Fahrer über Bedienschalter 5 ein Anziehen oder ein Lösen der Parkbremse an, so synchronisieren sich die Recheneinheiten 7, 7' der beiden mit Parkbremse bestückten Räder mittels Kommunikation über den internen Datenbus. Hierbei wird z.B. ein Kommando zum Betätigen oder Lösen der Parkbremse über den die beiden Prozessoren verbindenden Datenbus innerhalb des Steuergeräts ausgetauscht. Ein nicht gestörter bzw. fehlerfreier kernredundanter Mikrokontroller 7, 7' steuert den ihm zugeordneten Parkbremsaktuator direkt an. Eine logische Entscheidung zum Betätigen oder Lösen der Parkbremse kann durch eine Parkbremsschalterbedienung oder den vorliegenden Betriebszustand des Fahrzeugs ausgelöst werden, wie z.B. ein Ausschalten der Zündung (woraufhin die Parkbremse angezogen wird) oder ein Anfahren (welches ein Lösen der Parkbremse bewirkt, das vorzugsweise in Abhängigkeit von der Gaspedalbetätigung bzw. dem aktuell anliegenden Motormoment erfolgt). Daraufhin werden die elektrischen bzw. elektromechanischen Parkbremsaktuatoren parallel oder zeitlich versetzt bestromt. Da die Parkbremsaktuatoren eine mechanische Feststellfunktion besitzen, bleibt nach der Betätigung die Bremswirkung auch ohne Stromversorgung erhalten.

Eine erfindungsgemäß aufgebaute Parkbremse erreicht eine Einfehlertoleranz entlang des Bedienpfades zwischen Bedienelement 5, wie z.B. Parkbrems-Taster oder -Schalter, Steuergerät 6 und Aktuator 3a, 3b. Die elektromechanischen Parkbremsaktuatoren 3a, 3b können auf eine spezielle Reibbremse wie z.B. eine Duo-Servo-Trommelbremse, die zusätzlich zu einer für die Betriebsbremse verwendeten Scheibenbremse dem entsprechenden Rad zugeordnet ist, oder über ein geeignetes im Bremssattel integriertes Zuspannelement z.B. auf die Bremsscheiben der Betriebsbremse wirken (man spricht auch von integrierter Parkbremse).

Tritt in einer der Recheneinheiten 7, 7' ein Fehler auf, so kann die zweite Recheneinheit nun mindestens das eine ihr zugeordnete Rad der Parkbremse bedienen. Somit ist eine Verhinderung des Wegrollens des Fahrzeugs damit zuverlässig darstellbar, auch wenn eine Recheneinheit gestört ist.

Vorteilhafterweise ermöglicht ein derartiger Systemaufbau, die Getriebesperre bei Automatikgetrieben entfallen zu lassen bzw. bei Elektrofahrzeugen ohne Schaltgetriebe und mit unzureichender Selbsthemmung eine sichere Parkmöglichkeit auch bei Auftreten eines Einzelfehlers darzustellen. Bei elektrisch angesteuerten Getriebesperren können das zur Ansteuerung verwendete Steuergerät oder der entsprechende Schaltungsteil und die entsprechende Verkabelung ebenfalls entfallen.

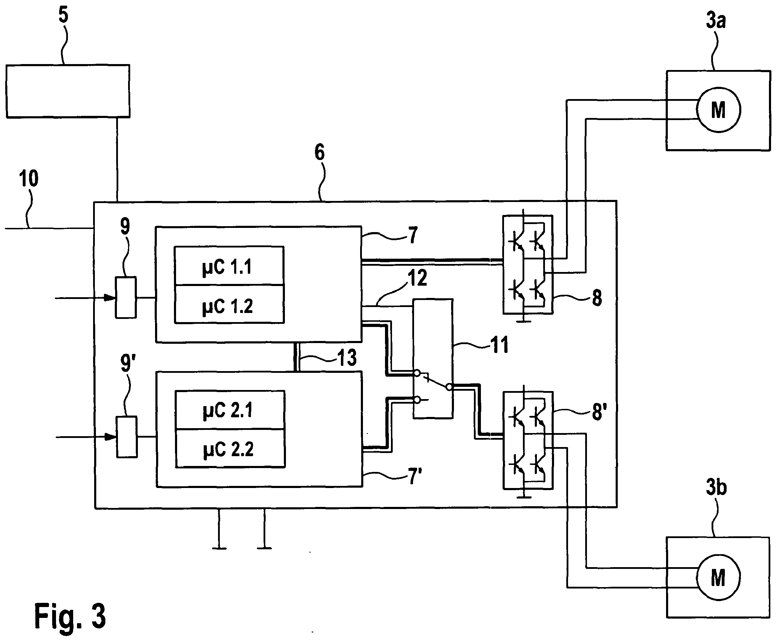

Ein zweites Ausführungsbeispiel einer fehlersicheren Parkbremse ist in Figur 3 gezeigt. Diese unterscheidet sich dadurch von der in Figur 2 dargestellten Ausführung, das ein Umschalter 11 die erste Recheneinheit 7 mit dem zweiten elektrischen Parkbremsaktuator 8' verbindet. Im fehlerlosen Betrieb der beiden kernredundanten Mikrocontroller steuert die erste Recheneinheit 7 beide Parkbremsaktuatoren 8, 8' direkt an. Die zweite Recheneinheit 7' kann ein unabhängiges Programm ausführen, wodurch die vorhandene Rechenleistung optimal genutzt wird und zusätzliche Funktionen bereit gestellt werden können, die z.B. den Komfort des Fahrers erhöhen. Alternativ kann die zweite Recheneinheit auch heruntergetaktet oder in einen Schlafmodus versetzt werden, um den Stromverbrauch zu verringern. Hier findet z.B. nur noch ein Empfang auf dem internen Datenbus 13 statt, um Status- und/oder Fehlermeldungen der ersten Recheneinheit zu empfangen.

Tritt bei der beide Parkbremsaktuatoren 3a, 3b bedienenden ersten Recheneinheit 7 ein Fehler auf, so übernimmt die zweite Recheneinheit 7' die Ansteuerung mindestens eines elektrischen Parkbremsaktuators. Die erste Recheneinheit 7 weist hierfür Mittel zur Fehlererkennung auf, die im Fehlerfall ein Signal 12 an Umschalter bzw. Multiplexer 11 senden, der die Ansteuerschaltung zumindest eines Aktuators mit der zweiten Recheneinheit 7' verbindet. Selbstverständlich könnte auch nur die Polarität bzw. der Pegel von Signal 12 geändert werden, um einen Fehler anzuzeigen. Umschalter 11 kann auch eine Schaltung zur Erkennung von steigenden bzw. fallenden Flanken von Signal 12 enthalten.

Auch in diesem Ausführungsbeispiel ist es vorteilhaft, wenn neben den getrennt nutzbaren Recheneinheiten 7, 7' und den zugeordneten Parkbremsaktuatoren 3a, 3b eine zweite Stromversorgung vorhanden ist, welche bei Ausfällen eine zuverlässige Abstellmöglichkeit bietet. Die elektrische Versorgung der Parkbremsaktuatoren kann über getrennte Spannungsquellen der beiden unabhängigen Recheneinheiten 7, 7' (insbesondere kernredundanten Mikrocontrollern) und zugordnete Leistungselektroniken (bzw. Ansteuerschaltungen) erfolgen oder über einen Umschalter bzw. Multiplexer ebenfalls umschaltbar ausgeführt sein.

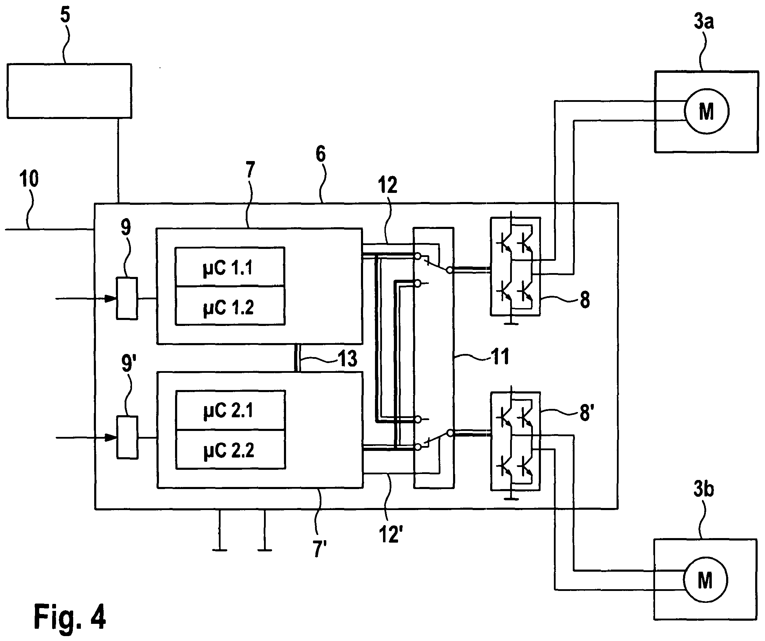

Figur 4 zeigt ein drittes Ausführungsbeispiel einer fehlersicheren Parkbremse. Gegenüber der in Figur 3 gezeigten Ausführung ist Umschalter 11 nun derart ausgebildet, dass jeweils eine Recheneinheit die Ansteuerung des Parkbremsaktuators der dem anderen Rad zugeordneten Recheneinheit übernehmen kann. Man kann Umschalter 11 prinzipiell auch als zwei getrennte Umschalter ansehen, die jeweils durch ein Fehlersignal 12, 12' der im Normalfall mit der Ansteuerschaltung 8, 8' verbundenen Recheneinheit 7, 7' angesteuert werden. Somit können jeweils beide Parkbremsaktuatoren 3a, 3b von der fehlerfreien Recheneinheit (entweder 7 oder 7') angesteuert werden.

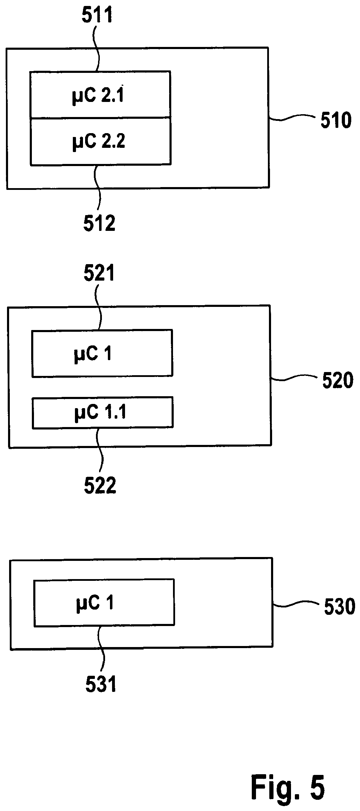

In Figur 5 sind verschiedene Ausführungsformen zumindest teilweise redundanter Recheneinheiten gezeigt.

510 zeigt zwei synchron bzw. im Lockstep-Verfahren arbeitende Prozessorkerne 511, 512. Hierbei führen beide Prozessorkerne identische Anweisungen aus, und die Ergebnisse werden in einem mit beiden Prozessorkernen verbundenen Vergleicher auf Übereinstimmung überprüft. Bei Auftreten eines Fehlers kann durch ein spezielles Fehlerbehandlungsprogramm die Ursache ermittelt und/oder der gestörte Prozessorkern in einen definierten Zustand gebracht werden. Insbesondere ist es möglich, nach erfolgreichem Abschluss einer Prüfroutine die beiden Prozessorkerne wieder im Lockstep-Verfahren zu betreiben. Eine weitere Erhöhung der Zuverlässigkeit ist möglich, wenn drei identische Prozessorkerne die Anweisungen ausführen. Somit kann (unter der Annahme eines Einzelfehlers) auch im Fehlerfall das "Nutzprogramm" ohne Unterbrechung durchgeführt werden. Die Prozessorkerne sind zweckmäßigerweise auf einem Substrat bzw. Chip integriert, prinzipiell wäre auch eine Realisierung mit getrennten Mikrocontrollern möglich. Je nach Fehlerwahrscheinlichkeit können sich die Prozessorkerne auch manche Einrichtungen, wie z.B. einen nichtflüchtigen Speicher mit den Programmdaten teilen, sofern diese geeignete Mittel zur Fehlererkennung aufweisen, wie z.B. eine Paritätsüberprüfung.

520 zeigt einen Mikrocontroller mit zwei asynchron arbeitende Prozessorkernen 521, 522, die sich gegenseitig überwachen oder eine Architektur, bei der ein Prozessorkern den anderen überwacht, während dieser die externen Aktuatoren ansteuert. Hierbei können gleiche oder verschiedenartige Prozessorkerne eingesetzt werden. Der Mikrocontroller kann auch nur teilweise zweifach vorhandene Strukturen wie Prozessorkern und/oder Arbeitsspeicher aufweisen. Andere Teile wie nichtflüchtiger Speicher und/oder Peripherieelemente werden durch andere Sicherheitstechniken wie Überwachung der Parität oder internes Plausibilisieren abgesichert.

530 zeigt eine Ausführungsform, bei der vorzugsweise in verschiedenen Tasks laufende Softwareroutinen unabhängige Recheneinheiten emulieren. Die verschiedenen Softwareroutinen überwachen sich gegenseitig; durch einen Watchdog-Zähler, der im Normalbetrieb in regelmäßigen Abständen zurückgesetzt werden muss, wird der Mikrocontroller extern abgesichert.

Indem die Redundanz je nach Fehlerwahrscheinlichkeit und Anforderungen geeignet skaliert wird, kann eine hinreichende Zuverlässigkeit bei geringen Kosten erreicht werden.

## Patentansprüche

1. Bremssystem für ein Kraftfahrzeug, umfassend eine Betriebsbremse an allen Rädern und elektrische Parkbremsaktuatoren an mindestens zwei Rädern, welches ein elektronisches Steuergerät zur Ansteuerung der Betriebsbremse und der elektrischen Parkbremsaktuatoren umfasst, wobei das elektronische Steuergerät mindestens eine Schnittstelle zu einem Parkbremsbedienelement und mindestens zwei Ansteuerschaltungen für die elektrischen Parkbremsaktuatoren aufweist und zwei oder mehr unabhängige Recheneinheiten umfasst, die über einen Datenbus direkt miteinander verbunden sind, wobei mindestens zwei der unabhängigen Recheneinheiten zumindest teilweise redundant ausgeführt sind und dass den mindestens zwei unabhängigen Recheneinheiten des elektronischen Steuergeräts jeweils eine Stromversorgung zugeordnet ist.

2. Bremssystem nach Anspruch 1, **dadurch gekennzeichnet, dass** die Stromversorgungen der Recheneinheiten jeweils mindestens einen Spannungswandler und mindestens eine Sicherung umfassen, insbesondere jeweils eine Batterie und/oder einen Generator umfassen.

3. Bremssystem nach mindestens einem der vorhergehenden Ansprüche, **dadurch gekennzeichnet, dass** die unabhängigen Recheneinheiten und der Datenbus auf einem Substrat, insbesondere einem Silizium-Chip, integriert sind.

4. Bremssystem nach Anspruch 3, **dadurch gekennzeichnet, dass** mindestens eine der Recheneinheiten, insbesondere zwei, als kernredundanter Mikrocontroller ausgebildet ist, insbesondere mit zwei im Lockstep-Verfahren arbeitenden Prozessorkernen.

5. Bremssystem nach Anspruch 3 oder 4, **dadurch gekennzeichnet, dass** mindestens eine der Recheneinheiten als Mikrocontroller mit asynchroner Redundanz ausgebildet ist, wobei zwei Prozessorkerne zumindest teilweise auf gemeinsame Einrichtungen zugreifen, insbesondere einen mit Paritätsüberprüfung gesicherten flüchtigen oder nichtflüchtigen Speicher.

6. Bremssystem nach mindestens einem der Ansprüche 3 bis 5, **dadurch gekennzeichnet, dass** mindestens eine der Recheneinheiten als durch einen Watchdog-Zähler abgesicherter Mikrocontroller ausgebildet ist, welcher zwei sich gegenseitig überwachende Prozesse ausführt.

7. Bremssystem nach mindestens einem der vorhergehenden Ansprüche, **dadurch gekennzeichnet, dass** mindestens zwei unabhängige Ansteuerschaltungen für die elektrischen Parkbremsaktuatoren, insbesondere Pulsweitenmodulationsschaltungen und Brückenschaltungen, vorhanden sind, denen jeweils eine Stromversorgung zugeordnet ist, welche vorzugsweise mindestens einen Spannungswandler und mindestens eine Sicherung, insbesondere jeweils eine Batterie und/oder einen Generator umfasst.

8. Bremssystem nach mindestens einem der vorhergehenden Ansprüche, **dadurch gekennzeichnet, dass** mindestens eine der Recheneinheiten Mittel zur Fehlererkennung umfasst, welche bei Auftreten eines Fehlers ein Signal auf dem Datenbus und/oder einer Fehlerschnittstelle ausgeben.

9. Bremssystem nach Anspruch 8, **dadurch gekennzeichnet, dass** eine erste Recheneinheit mit zwei Ansteuerschaltungen für die elektrischen Parkbremsaktuatoren, insbesondere Brückenschaltungen, verbunden ist, wobei in der Verbindung zwischen erster Recheneinheit und mindestens einer Ansteuerschaltung ein Umschalter angebracht ist, der mit einer zweiten Recheneinheit und einer Fehlerschnittstelle der ersten Recheneinheit verbunden ist.

10. Bremssystem nach Anspruch 8, **dadurch gekennzeichnet, dass** eine erste Recheneinheit mit einer ersten Ansteuerschaltung für elektrische Parkbremsaktuatoren und eine zweite Recheneinheit mit einer zweiten Ansteuerschaltung für elektrische Parkbremsaktuatoren verbunden sind.

11. Bremssystem nach Anspruch 8, **dadurch gekennzeichnet, dass** in der Verbindung zwischen erster Recheneinheit und erster Ansteuerschaltung ein erster Umschalter angebracht ist, und in der Verbindung zwischen zweiter Recheneinheit und zweiter Ansteuerschaltung ein zweiter Umschalter angebracht ist, wobei der erste Umschalter mit der zweiten Recheneinheit und einer Fehlerschnittstelle der ersten Recheneinheit verbunden ist, und der zweite Umschalter mit der ersten Recheneinheit und einer Fehlerschnittstelle der zweiten Recheneinheit verbunden ist.

12. Bremssystem nach mindestens einem der vorhergehenden Ansprüche, **dadurch gekennzeichnet, dass** das elektronische Steuergerät mindestens einen Beschleunigungssensor, mindestens einen Gierratensensor, und mindestens eine Schnittstelle für Raddrehzahlsensoren umfasst.

13. Bremssystem nach mindestens einem der vorhergehenden Ansprüche, **dadurch gekennzeichnet, dass** das elektronische Steuergerät mindestens eine Schnittstelle zu einem Externdatenbus, insbesondere einem CAN- oder FlexRay-Bus umfasst.

14. Bremssystem nach mindestens einem der vorhergehenden Ansprüche, **dadurch gekennzeichnet, dass** das elektronische Steuergerät mindestens ein elektrisch ansteuerbares Hydraulikventil, mindestens eine elektrische Hydraulikpumpe, und mindestens eine Schnittstelle für Drucksensoren umfasst.

15. Bremssystem nach einem der Ansprüche 1 bis 14, **dadurch gekennzeichnet, dass** die Betriebsbremse zumindest einen hydraulischen Bremskreis aufweist und das elektronische Steuergerät eine Schlupfregelung und/oder Fahrdynamikregelung bereitstellt.

16. Bremssystem nach einem der Ansprüche 1 bis 15, **dadurch gekennzeichnet, dass** die Räder mindestens einer Achse als Betriebsbremse elektromechanische Reibbremsen aufweisen.

17. Kraftfahrzeug, **gekennzeichnet durch** ein Bremssystem nach mindestens einem der Ansprüche 1 bis 16.

18. Kraftfahrzeug nach Anspruch 17, **dadurch gekennzeichnet, dass** ein Verbrennungsmotor und/oder ein Elektromotor über ein automatisches Getriebe ohne Getriebesperre mit den Rädern mindestens einer Achse verbunden ist.

## Claims

1. Brake system for a motor vehicle, comprising a service brake on all wheels and electric parking brake actuators on at least two wheels, which brake system comprises an electronic controller for controlling the service brake and the electric parking brake actuators, wherein the electronic controller has at least one interface to a parking brake control element and at least two drive circuits for the electric parking brake actuators and comprises two or a plurality of independent arithmetic units, which are directly connected to each other by means of a data bus, at least two of the independent arithmetic units are implemented at least partly in redundant form and that the at least two independent arithmetic units of the electronic controller are each associated with a power supply.

2. Brake system according to Claim 1, **characterized in that** the power supplies of the arithmetic units in each case comprise at least one voltage converter and at least one fuse, in particular in each case comprise a battery and/or a generator.

3. Brake system according to at least one of the preceding claims, **characterized in that** the independent arithmetic units and the data bus are integrated on a substrate, in particular a silicon chip.

4. Brake system according to Claim 3, **characterized in that** at least one of the arithmetic units, in particular two, is in the form of a redundant core microcontroller, in particular with two processor cores working in lockstep mode.

5. Brake system according to Claim 3 or 4, **characterized in that** at least one of the arithmetic units is in the form of a microcontroller with asynchronous redundancy, wherein two processor cores at least partly access common devices, in particular a volatile or non-volatile memory protected with parity checking.

6. Brake system according to at least one of Claims 3 to 5, **characterized in that** at least one of the arithmetic units is in the form of a microcontroller protected by a watchdog counter, which runs two processes that monitor each other.

7. Brake system according to at least one of the preceding claims, **characterized in that** at least two independent drive circuits for the electric parking brake actuators, in particular pulse width modulation circuits and bridge circuits, are provided, each of which is associated with a power supply, which preferably comprises at least one voltage converter and at least one fuse, in particular in each case a battery and/or a generator.

8. Brake system according to at least one of the preceding claims, **characterized in that** at least one of the arithmetic units comprises means for error recognition, which outputs a signal on the data bus and/or to an error interface when a fault occurs.

9. Brake system according to Claim 8, **characterized in that** a first arithmetic unit is connected to two drive circuits for the electric parking brake actuators, in particular bridge circuits, wherein a switch is disposed in the connection between the first arithmetic unit and at least one drive circuit, which is connected to a second arithmetic unit and an error interface of the first arithmetic unit.

10. Brake system according to Claim 8, **characterized in that** a first arithmetic unit is connected to a first drive circuit for electric parking brake actuators and a second arithmetic unit is connected to a second drive circuit for electric parking brake actuators.

11. Brake system according to Claim 8, **characterized in that** a first switch is disposed in the connection between a first arithmetic unit and a first drive circuit, and a second switch is disposed in the connection between a second arithmetic unit and a second drive circuit, wherein the first switch is connected to the second arithmetic unit and an error interface of the first arithmetic unit, and the second switch is connected to the first arithmetic unit and an error interface of the second arithmetic unit.

12. Brake system according to at least one of the preceding claims, **characterized in that** the electronic controller comprises at least one acceleration sensor, at least one yaw rate sensor and at least one interface for wheel revolution rate sensors.

13. Brake system according to at least one of the preceding claims, **characterized in that** the electronic controller comprises at least one interface to an external data bus, in particular a CAN or FlexRay bus.

14. Brake system according to at least one of the preceding claims, **characterized in that** the electronic controller comprises at least one electrically controllable hydraulic valve, at least one electric hydraulic pump and at least one interface for pressure sensors.

15. Brake system according to one of Claims 1 to 14, **characterized in that** the service brake comprises at least one hydraulic brake circuit and the electronic controller provides traction control and/or driving dynamics control.

16. Brake system according to one of Claims 1 to 15, **characterized in that** the wheels of at least one axle comprise electromechanical friction brakes as a service brake.

17. Motor vehicle, **characterized by** a brake system according to at least one of Claims 1 to 16.

18. Motor vehicle according to Claim 17, **characterized in that** an internal combustion engine and/or an electric motor is connected to the wheels of at least one axle via an automatic gearbox without a transmission lock.

## Revendications

1. Système de freinage pour véhicule automobile, comprenant un frein de service sur la totalité des roues et des actionneurs de freins de stationnement sur au moins deux roues, comprenant un appareil de commande électronique destiné à commander le frein de service et les actionneurs de freins de stationnement électriques, dans lequel l'appareil de commande électronique comporte au moins une interface pour un élément de commande de freins de stationnement et au moins deux circuits de commande destinés aux actionneurs de freins de stationnement électriques, et deux unités de calcul indépendantes ou plus, qui sont directement reliées l'une à l'autre par l'intermédiaire d'un bus de données, dans lequel au moins deux des unités de calcul indépendantes sont réalisées de manière au moins partiellement redondante et dans lequel une alimentation en courant est respectivement associée aux au moins deux unités de calcul indépendantes de l'appareil de commande électronique.

2. Système de freinage selon la revendication 1, **caractérisé en ce que** les alimentations en courant des unités de calcul comprennent respectivement au moins un convertisseur de tension et au moins un coupe-circuit et comprennent notamment respectivement une batterie et/ou un générateur.

3. Système de freinage selon au moins l'une des revendications précédentes, **caractérisé en ce que** les unités de calcul indépendantes et le bus de données sont intégrés sur un substrat, notamment une puce au silicium.

4. Système de freinage selon la revendication 3, **caractérisé en ce qu'**au moins l'une des unités de calcul, notamment deux, est réalisée sous la forme de microcontrôleurs à coeurs redondants, comportant en particulier deux coeurs de processeur fonctionnant selon un processus de fonctionnement en synchronisme.

5. Système de freinage selon la revendication 3 ou 4, **caractérisé en ce qu'**au moins l'une des unités de calcul est réalisée sous la forme d'un microcontrôleur présentant une redondance asynchrone, dans lequel deux coeurs de processeur accèdent au moins partiellement à des dispositifs communs, notamment à une mémoire volatile ou non volatile sécurisée par contrôle de parité.

6. Système de freinage selon au moins l'une des revendications 3 à 5, **caractérisé en ce qu'**au moins l'une des unités de calcul est réalisée sous la forme d'un microcontrôleur sécurisé au moyen d'un compteur à dispositif de surveillance, qui exécute deux processus se surveillant mutuellement.

7. Système de freinage selon au moins l'une des revendications précédentes, **caractérisé en ce qu'**au moins deux circuits de commande indépendants sont prévus pour les actionneurs de freins de stationnement électriques, notamment des circuits à modulation d'impulsion en largeur et des circuits en pont auxquels est associée une alimentation en courant respective qui comprend de préférence au moins un convertisseur de tension et au moins un coupe-circuit, et qui comprend en particulier respectivement une batterie et/ou un générateur.

8. Système de freinage selon au moins l'une des revendications précédentes, **caractérisé en ce qu'**au moins l'une des unités de calcul comprend des moyens de détection de défaut qui délivrent un signal sur le bus de données et/ou sur une interface de détection de défaut lors de l'apparition d'un défaut.

9. Système de freinage selon la revendication 8, **caractérisé en ce qu'**une première unité de calcul est reliée à deux circuits de commande destinés aux actionneurs de freins de stationnement électriques, notamment à des circuits en pont, dans lequel un convertisseur est monté sur la liaison entre la première unité de calcul et au moins un circuit de commande, lequel convertisseur est relié à une seconde unité de calcul et à une interface de détection de défaut de la première unité de calcul.

10. Système de freinage selon la revendication 8, **caractérisé en ce qu'**une première unité de calcul est reliée à un premier circuit de commande destiné à des actionneurs de freins de stationnement électriques, et **en ce qu'**une seconde unité de calcul est reliée à un second circuit de commande destiné à des actionneurs de freins de stationnement électriques.

11. Système de freinage selon la revendication 8, **caractérisé en ce qu'**un premier convertisseur est monté sur la liaison entre la première unité de calcul et le premier circuit de commande et **en ce qu'**un second convertisseur est monté sur la liaison entre la seconde unité de calcul et le second circuit de commande, dans lequel le premier convertisseur est relié à la seconde unité de calcul et à une interface de détection de défaut de la première unité de calcul, et le second convertisseur est relié à la première unité de calcul et à une interface de détection de défaut de la seconde unité de calcul.

12. Système de freinage selon au moins l'une des revendications précédentes, **caractérisé en ce que** l'appareil de commande électronique comprend au moins un capteur d'accélération, au moins un capteur de lacet et au moins une interface pour des capteurs de vitesse de rotation de roues.

13. Système de freinage selon au moins l'une des revendications précédentes, **caractérisé en ce que** l'appareil de commande électronique comprend au moins une interface pour un bus de données externe, en particulier un bus CAN ou FlexRay.

14. Système de freinage selon au moins l'une des revendications précédentes, **caractérisé en ce que** l'appareil de commande électronique comprend au moins une vanne hydraulique pouvant être commandée électriquement, au moins une pompe hydraulique électrique et au moins une interface pour des capteurs de pression.

15. Système de freinage selon l'une quelconque des revendications 1 à 14, **caractérisé en ce que** le système de freinage comporte au moins un circuit de freinage hydraulique et **en ce que** l'appareil de commande électronique assure une régulation du glissement de roue et/ou une régulation de la dynamique de conduite.

16. Système de freinage selon l'une quelconque des revendications 1 à 15, **caractérisé en ce que** les roues d'au moins un essieu présentent des freins à friction électromécaniques en tant que freins de service.

17. Véhicule automobile, **caractérisé par** un système de freinage selon au moins l'une des revendications 1 à 16.

18. Véhicule automobile selon la revendication 17, **caractérisé en ce qu'**un moteur à combustion et/ou un moteur électrique est/sont relié(s) par l'intermédiaire d'une transmission automatique sans blocage de transmission aux roues d'au moins un essieu.
